# EUROPEAN PATENT SPECIFICATION

(11) **EP 2 674 197 B1**
(45) Date of publication and mention of the grant of the patent: **20.03.2019**
(21) Application number: 12191859.3
(22) Date of filing: 08.11.2012
(51) Int. Cl.: A62C 3/04, A62C 99/00

(54) **Fire prevention in storage silos**
Brandschutz in Lagersilos
Prévention des incendies dans des silos de stockage

(30) Priority: 14.06.2012 GB 201210563
(43) Date of publication of application: 18.12.2013
(73) Proprietor: Linde Aktiengesellschaft, 80331 München (DE)
(72) Inventor: Machett, Luke Andrew, Pontefract, Yorkshire WF8 3LA (GB); Mills, Simon, Sheffield, Yorkshire S6 4QP (GB)
(74) Representative: Richmond, Sarah

(56) References cited:
- EP-A1- 1 685 878
- EP-A1- 2 016 980
- US-A1- 2011 253 398

## Description

The present invention relates to a method and apparatus for preventing and extinguishing fires in silos for storing flammable materials. In particular, the invention relates to the prevention and extinguishing of fires in biomass storage vessels.

The burning of biomass as a fuel in power stations has become more prevalent in recent years and the volume of biomass used and stored at power stations has correspondingly increased. In general terms, biomass comprises plant matter which is shredded and compacted into pellets. The pellets are stored in large silos (which can range from hundreds of cubic metres to thousands of cubic metres) prior to being conveyed for use in the boilers. A typical source of biomass plant matter is wood and the following description is given in the context of wood biomass. However, the invention applies equally to other types of biomass and to other types of flammable materials.

Not only are biomass pellets stored in large silos, but so too is biomass dust which is generated from the pellets during storage and handling. The dust is drawn off in an air stream which is filtered to remove the dust. The dust is then pneumatically conveyed to dust silos where it is stored prior to being burnt in the boilers.

Fires may occur in both biomass pellet storage silos and dust storage silos, and the factors which cause fires in both cases are broadly the same. An additional risk in the case of dust storage silos is explosion in the headspace by ignition of the dust itself, or ignition of flammable gases generated (or a combination of the two).

Fires in biomass storage vessels can come about as a result of bacterial and fungal activity which generate heat and produce methane, carbon monoxide and carbon dioxide. Heat accumulates to over 50°C leading to thermal oxidation of the wood. The temperature continues to rise leading to eventual ignition of the biomass.

Although water is the best medium for removing heat from smouldering fires, the use of water sprinklers would cause damage to the silos and cause wood dust to set, resulting in large costs and downtime. It is known in the art that smouldering fires can be controlled and extinguished by providing an inert atmosphere within the silo. This is achieved by providing a sustained flow of carbon dioxide for several days to allow heat to dissipate. The flow of carbon dioxide is typically supplied from a bulk low pressure (20.7 bar) cryogenic carbon dioxide storage vessel which is well known in the industry.

In the case of flaming fires, a rapid feed of liquid carbon dioxide is injected into the headspace of the silo to extinguish deep seated and surface fires. British Standard BS5306-4:2001 + A1:2012 for deep seated fires in dust collectors requires that the concentration of carbon dioxide in the headspace be brought up to 30% within 2 minutes and 74% within 7 minutes. The rapid flow of carbon dioxide is provided from a dedicated carbon dioxide fire extinguishing system.

US2011/0253398 discloses a fire prevention system for use in coal storage silos employing an inerting nitrogen gas stream and water sprays.

EP 1 685 878 discloses a fire prevention system for use in refuse storage silos employing streams of inerting carbon dioxide gas and liquid carbon dioxide.

The present invention provides an apparatus for preventing and extinguishing fires in silos containing flammable materials according to claim 1.

The present invention is advantageous as only one source of liquid carbon dioxide need be provided, leading to a simplified system and decreased installation, equipment and servicing costs. In a preferred embodiment, the flammable material is biomass.

Preferably, the first flow path is arranged to supply carbon dioxide at a first flow rate, and the second flow path is arranged to supply carbon dioxide at a second flow rate, wherein the first flow rate is less than the second flow rate. In order to achieve an inert atmosphere over the course of a few days to control smouldering fires it is not necessary to provide carbon dioxide at the same flow rate as required for the purposes of fire extinguishing. It is therefore advantageous to supply the substantially gaseous flow of carbon dioxide at a lower flow rate than required for fire extinguishing.

The first flow path preferably comprises a first supply control valve which is arranged to open and close the first flow path upon actuation. This allows the first flow path to be selectively turned on or off. The first flow control valve is preferably arranged to be automatically actuated upon detection of a first condition within the silo to allow automatic control of the first flow path.

Similarly, the second flow path preferably comprises a second flow control valve which is arranged to open and close the second flow path upon actuation to allow the second flow path to be selectively turned on or off. In addition, the second flow control valve is preferably arranged to be automatically actuated upon detection of a second condition within the silo to allow automatic operation of the second flow path.

The apparatus preferably comprises at least one carbon monoxide sensor located within the silo. It is advantageous to be able to sense carbon monoxide as the presence of carbon monoxide within the silo is an early indicator of fire. The detection of carbon monoxide thereby allows the fire prevention/extinguishing system to be actuated at the earliest opportunity (whether manually or automatically).

In a preferred embodiment, the first flow control valve is automatically actuated upon detection of a first carbon monoxide concentration and the second flow control valve is automatically actuated upon detection of a second carbon monoxide concentration. This allows for carbon monoxide based automatic actuation and allows the criteria for the automatic actuation to be set and adjusted if necessary.

The system may advantageously further comprise at least one flame detector and/or at least one smoke detector. If desired, the automatic actuation of the first and/or second automatic control valves can be arranged to depend on the detection of flames and/or smoke in addition to, or instead of, carbon monoxide.

In a preferred embodiment, the apparatus may further comprise at least one additional first flow path extending from the liquid outlet to a first inlet into the headspace of at least one additional silo; and at least one additional second flow path extending from the liquid outlet to a second inlet into the headspace of the at least one additional silo; wherein the at least one additional first flow path is arranged to supply substantially gaseous carbon dioxide to the headspace of the at least one additional silo via the first inlet to said silo, and wherein the at least one additional second flow path is arranged to supply substantially liquid carbon dioxide to the second inlet to the at least one additional silo, wherein said second inlet is arranged so that, in use, the liquid carbon dioxide expands to carbon dioxide vapour and carbon dioxide snow substantially on entry into the headspace of the at least one additional silo.

In this embodiment one liquid carbon dioxide storage vessel can be used to supply carbon dioxide to more than one silo leading to further equipment and installation cost savings.

In another aspect, the present invention provides a method for preventing or extinguishing fires in a flammable material storage silo according to claim 15.

Preferably the method further comprises providing at least one additional first flow path from the liquid outlet to a first inlet into the headspace of at least one additional silo; and providing at least one additional second flow path from the liquid outlet to a second inlet into the headspace of the at least one additional silo; providing a flow of substantially gaseous carbon dioxide to the first inlet of the at least one additional silo via the at least one additional first flow path; or providing a flow of substantially liquid carbon dioxide to the second inlet of the at least one additional silo via the at least one additional second flow path, wherein said second inlet is arranged so that the flow of substantially liquid carbon dioxide expands to carbon dioxide vapour and carbon dioxide snow substantially on entry into the at least one additional silo.

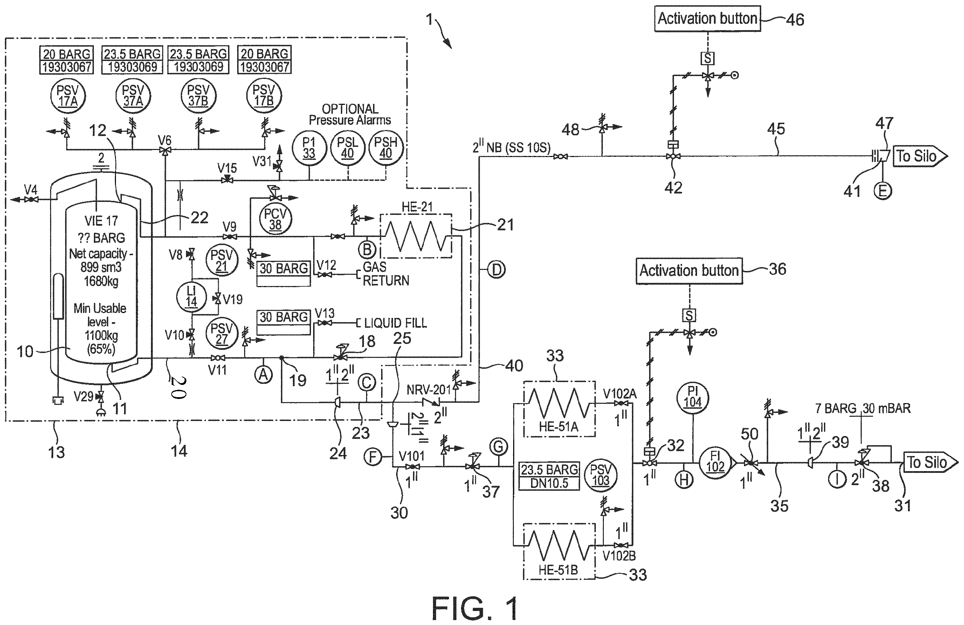

An example of the invention will now be described with reference to Figure 1 which is a schematic diagram of a fire prevention and extinguishing apparatus in accordance with claim 1.

Figure 1 shows a fire prevention and extinguishing apparatus 1. The apparatus 1 comprises a liquid carbon dioxide storage vessel 10 mounted on a portable skid 13. The storage vessel 10 is a low pressure storage vessel having an operating pressure of 20.7 bar and a capacity of 1600 litres. The storage vessel 10 comprises a refrigeration circuit (not shown) to prevent boil off of the liquid carbon dioxide.

In this example, the skid 13 is a VIE 17 available from The BOC Group having head offices at The Priestley Centre, 10 Priestley Road, Guildford, GU2 7XY, United Kingdom. The contents of the skid 13 are demarked in Figure 1 by broken line 14. For the sake of clarity, not all of the components within broken line 14 are described below. The components of the skid 13 will, however, be familiar to a person skilled in the art.

The capacity of the storage vessel 10 must be sufficient to enable the biomass silo (not shown) to be filled to 74% carbon dioxide (accounting for leakages) within 7 minutes in order to comply with BS5306-4:2012 for fire extinguishing of deep seated fires. In this example the apparatus 1 is suitable for a silo having a capacity of 234m³. The capacity of the storage vessel 10 will be dependent on the size of the silo and will be specified according to the needs of the particular installation. The capacities and sizes given here are examples only and are not to be considered as essential to the scope of the invention.

In this example, the storage vessel 10 comprises a liquid outlet 11 and a gas return inlet 12. In use, liquid carbon dioxide exits the storage vessel 10 via the liquid outlet 11 and passes in to liquid outlet pipe 20. The liquid outlet pipe 20 leads to a branch 19, one downstream side of which leads to an ambient vaporiser 21, and the other downstream side of which leads to a pipe expander 24. A portion of the flow, determined by flow regulator 18, enters the ambient vaporiser 21 which converts the liquid carbon dioxide to gaseous carbon dioxide which is then returned to the storage vessel via return pipe 22 and gas return inlet 12 which opens into the ullage space of the storage vessel 10.

The return flow of gas into the storage vessel 10 helps to maintain the pressure of the liquid carbon dioxide within the vessel 10. As liquid is drawn from the vessel 10 the ullage space above the liquid increases and the gas pressure therefore decreases. This, in effect, lowers the pressure of the liquid in the vessel 10 reducing the boiling point and having the effect of increasing the rate of flash of the liquid carbon dioxide into the headspace of the silo (described in detail below). By returning a portion of the outlet flow to the ullage space of the storage vessel 10, the pressure within the ullage space is maintained and this in turn maintains the boiling point of the liquid in the vessel 10. Although described in some detail here, it is to be understood that the gas return circuit 21, 22, 12 is not essential to the invention and that the invention can operate without the return circuit.

The pipework upstream of the pipe expander 24 has a nominal bore of 25mm. This pipework is connected, via the pipe expander 24, to a connector pipe 23 having a nominal bore of 50mm. The connector pipe 23 leads to a branch 25, the first downstream side of which connects to first outlet pipework 30, and the second downstream side of which connects to second outlet pipework 40.

The first outlet pipework 30 has a nominal bore of 25mm. The first downstream side of the branch 25 is connected to the upstream end of the first outlet pipework 30 via pipe reducer 26. The first outlet pipework 30 comprises first upstream outlet pipe 34 which leads to ambient vaporisers 33 which are arranged in parallel. The downstream side of the ambient vaporisers 33 connect to first outlet pipe 35 which leads to the headspace of the biomass storage silo (not shown) and terminates in first outlet 31. The first outlet 31 has a nominal bore of 50mm and is connected to first outlet pipe 35 via pipe expander 39. A first remotely actuated ball valve 32 is provided in first outlet pipe 35 to open or close the supply to first outlet 31. In this example, the first ball valve 32 is manually operated via first activation switch 36.

The second downstream side of branch 25 is connected to the upstream end of the second outlet pipework 40. The second outlet pipework 40 has a nominal bore of 50mm thus no pipe reduction is required. The second outlet pipework 40 comprises second outlet pipe 45 which leads to the headspace of the biomass storage silo (not shown) via second outlet 41. In this example, the second outlet 41 is an expansion orifice 47. However, in another embodiment, it may be a plurality of expansion orifices. A second remotely actuated ball valve 42 is provided in second outlet pipe 45 to open or close the supply to the expansion orifice 47. In this example, the second ball valve 42 is manually operated via second activation switch 46.

The biomass silo (not shown) comprises carbon monoxide sensors placed within the headspace of the silo. In an alternative example, the carbon monoxide sensors may be spaced throughout the depth of the silo or throughout the storage area within the silo. The carbon monoxide sensors are connected to a display panel (not shown) which displays the levels of carbon monoxide within the silo to the system's operator. Optionally, a carbon monoxide alarm may be provided to indicate that a threshold carbon monoxide has been reached within the silo. Depending on the output of the display, the sounding of an alarm or the detection of flame or smoke (either visually or by flame/smoke detectors), the system operator can open either of first or second ball valves 32, 42 depending on the type of fire event detected.

In the event that a smouldering fire is detected, the operator can open first ball valve 32 to provide a flow of gaseous carbon dioxide to the headspace of the silo. With first ball valve 32 open, and second ball valve 42 closed, liquid carbon dioxide is drawn from the storage vessel 10 via liquid outlet 11 and liquid outlet pipe 20. This flow passes into first outlet pipework 30 via the connector pipe 23 and branch 25 where it is vaporised in ambient vaporisers 33. The resulting gaseous flow of carbon dioxide is released in to the headspace of the silo via first outlet 31 for as long as is required to bring the smouldering fire under control (typically a number of days). The flow rate and pressure of gaseous carbon dioxide into the silo is controlled by pressure regulators 37, 38, and the maximum flow rate is restricted by restriction valve 50.

In the event that a flaming fire is detected, the operator can open second ball valve 42, with ball valve 32 closed, to provide a flow of liquid carbon dioxide to the expansion orifice 47. Liquid carbon dioxide is drawn from the storage vessel 10 via liquid outlet 11 and liquid outlet pipe 20. This flow passes into second outlet pipework 40 via the connector pipe 23 and branch 25. As the liquid carbon dioxide passes through the expansion orifice 47 it expands to produce carbon dioxide vapour and carbon dioxide snow into the headspace of the silo.

In this configuration the storage vessel 10 is essentially open ended, the flow rate being controlled, in part, by the pressure within the storage tank 10, but in the main by the size of the expansion orifice 47. The flow is sufficient to bring the concentration of carbon dioxide in the silo to 30% in 2 minutes and 74% in 7 minutes in order to comply with BS5306-4:2001 + A1:2012.

Because liquid carbon dioxide may be left in second outlet pipe 45 once the second control valve 42 is closed, a liquid lock pressure safety valve 48 is provided to allow the trapped carbon dioxide to vent to the atmosphere and prevent over pressurisation in the pipework.

Examples of operating flow rates are given in the tables below. Table 1 relates to a first operating condition with first ball valve 32 open (and second ball valve 42 closed) and gaseous carbon dioxide being supplied to the silo. Table 2 relates to a second operating condition with second ball valve 42 open (and first ball valve 32 closed) and liquid carbon dioxide vapour and carbon dioxide snow being supplied to the silo. The flow rates given in Tables 1 and 2 are examples only and are not to be viewed as essential to the invention.

**Table 1**

| Stream | Flowrate (sm3/hr) | Temp (°C) | Pressure (bar) | Vapour fraction | Liquid fraction | Solid fraction |
|---|---|---|---|---|---|---|
| A | 31.5 | -21.1 | 18 | 0.000 | 1.000 | 0.000 |
| B | 1.5 | -21.1 | 18 | 1.000 | 0.000 | 0.000 |
| C | 30 | -21.1 | 18 | 0.000 | 1.000 | 0.000 |
| D | - | - | - | - | - | - |
| E | - | - | - | - | - | - |
| F | 30 | -21.1 | 18 | 0.000 | 1.000 | 0.000 |
| G | 30 | -42.9 | 8 | 0.136 | 0.864 | 0.000 |
| H | 30 | 10 | 8 | 1.000 | 0.000 | 0.000 |
| I | 30 | 10 | 0.02-0.03 | 1.000 | 0.000 | 0.000 |

**Table 2**

| Stream | Flowrate (sm3/hr) | Temp (°C) | Pressure (bar) | Vapour fraction | Liquid fraction | Solid fraction |
|---|---|---|---|---|---|---|
| A | 3601.5 | -21.1 | 18 | 0.000 | 1.000 | 0.000 |
| B | 1.5 | -21.1 | 18 | 1.000 | 0.000 | 0.000 |
| C | 3600 | -21.1 | 18 | 0.000 | 1.000 | 0.000 |
| D | 3600 | -22.0 | 17.5 | 0.030 | 0.970 | - |
| E | 3600 | -78.3 | 0 | 0.6125 | - | 0.3875 |
| F | - | - | - | - | - | - |
| G | - | - | - | - | - | - |
| H | - | - | - | - | - | - |
| I | - | - | - | - | - | - |

In the example apparatus 1 described above, the first and second ball valves 32, 42 are manually operated upon detection of a condition (indicative of fire) within the silo. In another example, the operation of the first and second ball valves 32, 42 could be automatic such that upon detection of a first condition within the silo (for example, a first carbon monoxide concentration) first ball valve 32 opens, or upon detection of a second condition within the silo (for example, a second carbon monoxide concentration and/or detection of flame and/or smoke) second ball valve 42 opens. Other suitable fire detection systems are also contemplated within the scope of the invention.

In the example described above a standard "off the shelf" skid mounted liquid carbon dioxide storage vessel 10 is used. Such vessels typically have a nominal liquid outlet bore of 25mm. In another example (not shown), a custom built liquid carbon dioxide storage vessel could be used depending on the needs of the particular installation (for example the size of the silo). In this case the outlet from the storage vessel could have any nominal outlet bore desired, for example 50mm.

It is also within the scope of the invention for the liquid carbon dioxide storage vessel to supply more than one silo. The liquid carbon dioxide storage vessel can be specified or designed to supply as many silos as desired. In this case the apparatus 1 above is modified to provide t-pieces downstream of the ambient vaporisers 33 in the gaseous flow path 30, and downstream of the branch 25 in the liquid flow path 40. Each separate flow path is provided with its own ball valve and control switch (which may be manually or automatically actuated) so that each flow path may be independently operated depending on the conditions within the separate silos. In a further alternative example, the multiple flow paths may supply a single silo, or multiple silos may each have multiple flow paths serving them as the system requirements demand.

## Claims

1. An apparatus for preventing and extinguishing fires in silos containing flammable materials, the apparatus comprising:
a storage vessel (10) for storing liquid carbon dioxide, the storage vessel having a liquid outlet (11);
a first flow path (30) extending from the liquid outlet (11) to a first inlet (31) into the headspace of a silo; and
a second flow path (40) extending from the liquid outlet (11) to a second inlet (41) into the headspace of the silo;
wherein the second flow path (40) is arranged to supply substantially liquid carbon dioxide to the second inlet (41), **characterized in that**
the first flow path is arranged to supply substantially gaseous carbon dioxide to the headspace of the silo via a first inlet, and **in that** the second inlet (41) is arranged so that, in use, the liquid carbon dioxide expands to carbon dioxide vapour and carbon dioxide snow substantially on entry into the headspace of the silo.

2. An apparatus as claimed in claim 1, wherein the flammable material is biomass.

3. An apparatus as claimed in claim 1 or 2, wherein the first flow path (30) is arranged to supply carbon dioxide at a first flow rate, and wherein the second flow path (40) is arranged to supply carbon dioxide at a second flow rate, wherein the first flow rate is less than the second flow rate.

4. An apparatus as claimed in any preceding claim, wherein the first flow path (30) comprises a first supply control valve (32) which is arranged to open and close the first flow path (30) upon actuation.

5. An apparatus as claimed in claim 4, wherein the first flow control valve (32) is arranged to be automatically actuated upon detection of a first condition within the silo.

6. An apparatus as claimed in any preceding claim, wherein the second flow path (40) comprises a second flow control valve (42) which is arranged to open and close the second flow path (40) upon actuation.

7. An apparatus as claimed in claim 6, wherein the second flow control valve (42) is arranged to be automatically actuated upon detection of a second condition within the silo.

8. An apparatus as claimed in any preceding claim, further comprising at least one carbon monoxide sensor located within the silo.

9. An apparatus as claimed in claim 8, when dependent on claim 5, wherein the first condition is a first carbon monoxide concentration.

10. An apparatus as claimed in claim 8, when dependent on claim 7, wherein the second condition is a second carbon monoxide concentration.

11. An apparatus as claimed in any preceding claim, further comprising at least one flame detector.

12. An apparatus as claimed in any preceding claim, further comprising at least one smoke detector.

13. An apparatus as claimed in claim 11 or 12, when dependent on claim 7, wherein the second condition comprises the detection of flame and/or smoke.

14. An apparatus as claimed in any preceding claim, further comprising:
at least one additional first flow path extending from the liquid outlet (11) to a first inlet into the headspace of at least one additional silo; and
at least one additional second flow path extending from the liquid outlet (11) to a second inlet into the headspace of the at least one additional silo;
wherein the at least one additional first flow path is arranged to supply substantially gaseous carbon dioxide to the headspace of the at least one additional silo via the first inlet to said silo, and wherein the at least one additional second flow path is arranged to supply substantially liquid carbon dioxide to the second inlet to the at least one additional silo, wherein said second inlet is arranged so that, in use, the liquid carbon dioxide expands to carbon dioxide vapour and carbon dioxide snow substantially on entry into the headspace of the at least one additional silo.

15. A method for preventing or extinguishing fires in a flammable material storage silo, the method comprising:
providing a storage vessel (10) containing liquid carbon dioxide, the storage vessel having a liquid outlet (11);
providing a first flow path (30) from the liquid outlet (11) to a first inlet (31) into the headspace of the silo; **characterized by** providing a second flow path (40) from the liquid outlet (11) to a second inlet (41) into the headspace of the silo;
providing a flow of substantially gaseous carbon dioxide to the first inlet (31) via the first flow path (30); or
providing a flow of substantially liquid carbon dioxide to the second inlet (41) via the second flow path (40), wherein the second inlet (41) is arranged so that the flow of substantially liquid carbon dioxide expands to carbon dioxide vapour and carbon dioxide snow substantially on entry into the silo.

16. A method as claimed in claim15, further comprising:
providing at least one additional first flow path from the liquid outlet (11) to a first inlet into the headspace of at least one additional silo; and
providing at least one additional second flow path from the liquid outlet (11) to a second inlet into the headspace of the at least one additional silo;
providing a flow of substantially gaseous carbon dioxide to the first inlet of the at least one additional silo via the at least one additional first flow path; or
providing a flow of substantially liquid carbon dioxide to the second inlet of the at least one additional silo via the at least one additional second flow path, wherein said second inlet is arranged so that the flow of substantially liquid carbon dioxide expands to carbon dioxide vapour and carbon dioxide snow substantially on entry into the at least one additional silo.

## Patentansprüche

1. Vorrichtung zum Schutz vor und Löschen von Feuern in Silos, die brennbare Materialien beinhalten, die Vorrichtung aufweisend:
einen Lagerbehälter (10) zum Lagern von flüssigem Kohlendioxid, wobei der Lagerbehälter einen Flüssigkeitsauslass (11) hat;
einen ersten Strömungsweg (30), der sich vom Flüssigkeitsauslass (11) zu einem ersten Einlass (31) in den Kopfraum eines Silos erstreckt; und
einen zweiten Strömungsweg (40), der sich vom Flüssigkeitsauslass (11) zu einem zweiten Einlass (41) in den Kopfraum des Silos erstreckt;
wobei der zweite Strömungsweg (40) angeordnet ist, im Wesentlichen flüssiges Kohlendioxid an den zweiten Einlass (41) zu liefern, **dadurch gekennzeichnet, dass**
der erste Strömungsweg angeordnet ist, im Wesentlichen gasförmiges Kohlendioxid über einen ersten Einlass an den Kopfraum des Silos zu liefern, und dadurch, dass der zweite Einlass (41) derart angeordnet ist, dass in Verwendung das flüssige Kohlendioxid sich im Wesentlichen bei Eintritt in den Kopfraum des Silos zu Kohlendioxiddampf und Kohlensäureschnee ausdehnt.

2. Vorrichtung nach Anspruch 1, wobei das brennbare Material Biomasse ist.

3. Vorrichtung nach Anspruch 1 oder 2, wobei der erste Strömungsweg (30) angeordnet ist, Kohlendioxid bei einer ersten Strömungsrate zu liefern, und wobei der zweite Strömungsweg (40) angeordnet ist, Kohlendioxid bei einer zweiten Strömungsrate zu liefern, wobei die erste Strömungsrate niedriger ist als die zweite Strömungsrate.

4. Vorrichtung nach einem der vorangehenden Ansprüche, wobei der erste Strömungsweg (30) ein erstes Lieferregelventil (32) aufweist, das angeordnet ist, den ersten Strömungsweg (30) bei Betätigung zu öffnen und zu schließen.

5. Vorrichtung nach Anspruch 4, wobei das erste Stromregelventil (32) angeordnet ist, bei Erfassung einer ersten Bedingung innerhalb des Silos automatisch betätigt zu werden.

6. Vorrichtung nach einem der vorangehenden Ansprüche, wobei der zweite Strömungsweg (40) ein zweites Stromregelventil (42) aufweist, das angeordnet ist, den zweiten Strömungsweg (40) bei Betätigung zu öffnen und zu schließen.

7. Vorrichtung nach Anspruch 6, wobei das zweite Stromregelventil (42) angeordnet ist, bei Erfassung einer zweiten Bedingung innerhalb des Silos automatisch betätigt zu werden.

8. Vorrichtung nach einem der vorangehenden Ansprüche, ferner aufweisend mindestens einen Kohlenmonoxidsensor, der innerhalb des Silos liegt.

9. Vorrichtung nach Anspruch 8, wenn von Anspruch 5 abhängig, wobei die erste Bedingung eine erste Kohlenmonoxidkonzentration ist.

10. Vorrichtung nach Anspruch 8, wenn von Anspruch 7 abhängig, wobei die zweite Bedingung eine zweite Kohlenmonoxidkonzentration ist.

11. Vorrichtung nach einem der vorangehenden Ansprüche, ferner umfassend mindestens einen Brandmelder.

12. Vorrichtung nach einem der vorangehenden Ansprüche, ferner umfassend mindestens einen Rauchmelder.

13. Vorrichtung nach Anspruch 11 oder 12, wenn von Anspruch 7 abhängig, wobei die zweite Bedingung die Erfassung von Flammen und/oder Rauch aufweist.

14. Vorrichtung nach einem der vorangehenden Ansprüche, ferner umfassend:
mindestens einen zusätzlichen ersten Strömungsweg, der sich vom Flüssigkeitsauslass (11) zu einem ersten Einlass in den Kopfraum von mindestens einem zusätzlichen Silo erstreckt; und
mindestens einen zusätzlichen zweiten Strömungsweg, der sich vom Flüssigkeitsauslass (11) zu einem zweiten Einlass in den Kopfraum des mindestens einen zusätzlichen Silos erstreckt;
wobei der mindestens eine zusätzliche erste Strömungsweg angeordnet ist, im Wesentlichen gasförmiges Kohlendioxid über den ersten Einlass in das Silo an den Kopfraum des mindestens einen zusätzlichen Silos zu liefern und wobei der mindestens eine zusätzliche zweite Strömungsweg angeordnet ist, im Wesentlichen flüssiges Kohlendioxid an den zweiten Einlass in das mindestens eine zusätzliche Silo zu liefern, wobei der zweite Einlass derart angeordnet ist, dass in Verwendung das flüssige Kohlendioxid sich im Wesentlichen bei Eintritt in den Kopfraum des mindestens einen zusätzlichen Silos zu Kohlendioxiddampf und Kohlensäureschnee ausdehnt.

15. Verfahren zum Schutz vor und Löschen von Feuern in einem Lagersilo für brennbares Material, das Verfahren aufweisend:
Bereitstellen eines Lagerbehälters (10), der flüssiges Kohlendioxid beinhaltet, wobei der Lagerbehälter einen Flüssigkeitsauslass (11) hat;
Bereitstellen eines ersten Strömungswegs (30) vom Flüssigkeitsauslass (11) zu einem ersten Einlass (31) in den Kopfraum des Silos; **gekennzeichnet durch** Bereitstellen eines zweiten Strömungswegs (40) vom Flüssigkeitsauslass (11) zu einem zweiten Einlass (41) in den Kopfraum des Silos;
Bereitstellen eines Stroms von im Wesentlichen gasförmigem Kohlendioxid über den ersten Strömungsweg (30) zu dem ersten Einlass (31); oder Bereitstellen eines Stroms von im Wesentlichen flüssigem Kohlendioxid über den zweiten Strömungsweg (40) zu dem zweiten Einlass (41), wobei der zweite Einlass (41) derart angeordnet ist, dass der Strom von im Wesentlichen flüssigem Kohlendioxid sich im Wesentlichen bei Eintritt in den Kopfraum des mindestens einen zusätzlichen Silos zu Kohlendioxiddampf und Kohlensäureschnee ausdehnt.

16. Verfahren nach Anspruch 15, ferner aufweisend:
Bereitstellen mindestens eines zusätzlichen ersten Strömungswegs vom Flüssigkeitsauslass (11) zu einem ersten Einlass in den Kopfraum von zumindest einem zusätzlichen Silo; und
Bereitstellen mindestens eines zusätzlichen zweiten Strömungswegs vom Flüssigkeitsauslass (11) zu einem zweiten Einlass in den Kopfraum des mindestens einen zusätzlichen Silos;
Bereitstellen eines Stroms von im Wesentlichen gasförmigen Kohlendioxid über den mindestens einen zusätzlichen ersten Strömungsweg zu dem ersten Einlass des mindestens einen zusätzlichen Silos; oder
Bereitstellen eines Stroms von im Wesentlichen flüssigem Kohlendioxid über den mindestens einen zusätzlichen zweiten Strömungsweg zu dem zweiten Einlass des mindestens einen zusätzlichen Silos, wobei der zweite Einlass derart angeordnet ist, dass der Strom von im Wesentlichen flüssigem Kohlendioxid sich im Wesentlichen bei Eintritt in das mindestens eine zusätzliche Silo zu Kohlendioxiddampf und Kohlensäureschnee ausdehnt.

## Revendications

1. Appareil pour empêcher et éteindre des incendies dans des silos contenant des matériaux inflammables, l'appareil comprenant :
un récipient de stockage (10) pour stocker du dioxyde de carbone liquide, le récipient de stockage ayant un orifice de sortie de liquide (11) ;
un premier trajet d'écoulement (30) s'étendant depuis l'orifice de sortie de liquide (11) jusqu'à un premier orifice d'entrée (31) dans l'espace libre d'un silo ; et
un second trajet d'écoulement (40) s'étendant depuis l'orifice de sortie de liquide (11) jusqu'à un second orifice d'entrée (41) dans l'espace libre du silo ;
dans lequel le second trajet d'écoulement (40) est conçu pour fournir du dioxyde de carbone sensiblement liquide au second orifice d'entrée (41), **caractérisé en ce que**
le premier trajet d'écoulement est conçu pour fournir du dioxyde de carbone sensiblement gazeux à l'espace libre du silo par le biais d'un premier orifice d'entrée et **en ce que** le second orifice d'entrée (41) est conçu de telle sorte que, lors de l'utilisation, le dioxyde de carbone liquide se dilate en vapeur de dioxyde de carbone et en neige de dioxyde de carbone sensiblement à l'entrée dans l'espace libre du silo.

2. Appareil selon la revendication 1, dans lequel le matériau inflammable est de la biomasse.

3. Appareil selon la revendication 1 ou 2, dans lequel le premier trajet d'écoulement (30) est conçu pour fournir du dioxyde de carbone à un premier débit et dans lequel le second trajet d'écoulement (40) est conçu pour fournir du dioxyde de carbone à un second débit, dans lequel le premier débit est inférieur au second débit.

4. Appareil selon l'une quelconque des revendications précédentes, dans lequel le premier trajet d'écoulement (30) comprend une première vanne de régulation d'alimentation (32) qui est conçue pour ouvrir et fermer le premier trajet d'écoulement (30) lors de l'actionnement.

5. Appareil selon la revendication 4, dans lequel la première vanne de régulation d'écoulement (32) est conçue pour être automatiquement actionnée lors de la détection d'une première condition à l'intérieur du silo.

6. Appareil selon l'une quelconque des revendications précédentes, dans lequel le second trajet d'écoulement (40) comprend une seconde vanne de régulation d'écoulement (42) qui est conçue pour ouvrir et fermer le second trajet d'écoulement (40) lors de l'actionnement.

7. Appareil selon la revendication 6, dans lequel la seconde vanne de régulation d'écoulement (42) est conçue pour être automatiquement actionnée lors de la détection d'une seconde condition à l'intérieur du silo.

8. Appareil selon l'une quelconque des revendications précédentes, comprenant en outre au moins un capteur de monoxyde de carbone situé à l'intérieur du silo.

9. Appareil selon la revendication 8, lorsqu'elle dépend de la revendication 5, dans lequel la première condition est une première concentration en monoxyde de carbone.

10. Appareil selon la revendication 8, lorsqu'elle dépend de la revendication 7, dans lequel la seconde condition est une seconde concentration en monoxyde de carbone.

11. Appareil selon l'une quelconque des revendications précédentes, comprenant en outre au moins un détecteur de flamme.

12. Appareil selon l'une quelconque des revendications précédentes, comprenant en outre au moins un détecteur de fumée.

13. Appareil selon la revendication 11 ou 12, lorsqu'elle dépend de la revendication 7, dans lequel la seconde condition comprend la détection de flammes et/ou de fumée.

14. Appareil selon l'une quelconque des revendications précédentes, comprenant en outre :
au moins un premier trajet d'écoulement supplémentaire s'étendant depuis l'orifice de sortie de liquide (11) jusqu'à un premier orifice d'entrée dans l'espace libre d'au moins un silo supplémentaire ; et
au moins un second trajet d'écoulement supplémentaire s'étendant depuis l'orifice de sortie de liquide (11) jusqu'à un second orifice d'entrée dans l'espace libre du ou des silos supplémentaires ;
dans lequel le ou les premiers trajets d'écoulement supplémentaires sont conçus pour fournir du dioxyde de carbone sensiblement gazeux dans l'espace libre du ou des silos supplémentaires par le biais du premier orifice d'entrée dans ledit silo, et dans lequel le ou les seconds trajets d'écoulement supplémentaires sont conçus pour fournir du dioxyde de carbone sensiblement liquide au second orifice d'entrée dans le ou les silos supplémentaires, dans lequel ledit second orifice d'entrée est conçu de telle sorte que, lors de l'utilisation, le dioxyde de carbone liquide se dilate en vapeur de dioxyde de carbone et en neige de dioxyde de carbone sensiblement à l'entrée dans l'espace libre du ou des silos supplémentaires.

15. Procédé pour empêcher ou éteindre des incendies dans un silo de stockage de matériaux inflammables, le procédé consistant :
à fournir un récipient de stockage (10) contenant du dioxyde de carbone liquide, le récipient de stockage ayant un orifice de sortie de liquide (11) ; **caractérise en ce qu'**il consiste
à fournir un premier trajet d'écoulement (30) depuis l'orifice de sortie de liquide (11) jusqu'à un premier orifice d'entrée (31) dans l'espace libre du silo ;
à fournir un second trajet d'écoulement (40) depuis l'orifice de sortie de liquide (11) jusqu'à un second orifice d'entrée (41) dans l'espace libre du silo ;
à fournir un écoulement de dioxyde de carbone sensiblement gazeux au premier orifice d'entrée (31) par le biais du premier trajet d'écoulement (30) ; ou
à fournir un écoulement de dioxyde de carbone sensiblement liquide au second orifice d'entrée (41) par le biais du second trajet d'écoulement (40), dans lequel le second orifice d'entrée (41) est conçu de telle sorte que l'écoulement de dioxyde de carbone sensiblement liquide se dilate en vapeur de dioxyde de carbone et en neige de dioxyde de carbone sensiblement à l'entrée dans le silo.

16. Procédé selon la revendication 15, consistant en outre :
à fournir au moins un premier trajet d'écoulement supplémentaire depuis l'orifice de sortie de liquide (11) jusqu'à un premier orifice d'entrée dans l'espace libre d'au moins un silo supplémentaire ; et
à fournir au moins un second trajet d'écoulement supplémentaire depuis l'orifice de sortie de liquide (11) jusqu'à un second orifice d'entrée dans l'espace libre du ou des silos supplémentaires ;
à fournir un écoulement de dioxyde de carbone sensiblement gazeux jusqu'au premier orifice d'entrée du ou des silos supplémentaires par le biais du ou des premiers trajets d'écoulement supplémentaires ; ou
à fournir un écoulement de dioxyde de carbone sensiblement liquide jusqu'au second orifice d'entrée du ou des silos supplémentaires par le biais du ou des seconds trajets d'écoulement supplémentaires, dans lequel ledit second orifice d'entrée est conçu de telle sorte que l'écoulement de dioxyde de carbone sensiblement liquide se dilate en vapeur de dioxyde de carbone et en neige de dioxyde de carbone sensiblement à l'entrée dans le ou les silos supplémentaires.
